# NEUE EUROPÄISCHE PATENTSCHRIFT

(11) **EP 2 710 858 B2**
(45) Veröffentlichungstag und Bekanntmachung des Hinweises auf die Entscheidung über den Einspruch: **10.10.2018**
(45) Hinweis auf die Patenterteilung: 29.07.2015
(21) Anmeldenummer: 12727428.0
(22) Anmeldetag: 09.05.2012
(51) Int. Cl.: H05B 1/02, H05B 6/06, H02J 3/12

(54) **GARGERÄTEVORRICHTUNG**
COOKING APPLIANCE
APPAREIL DE CUISSON

(30) Priorität: 19.05.2011 ES 201130805
(43) Veröffentlichungstag der Anmeldung: 26.03.2014
(73) Patentinhaber: BSH Hausgeräte GmbH, 81739 München (DE)
(72) Erfinder: ANTON FALCON, Daniel, E-50010 Zaragoza (ES); BUÑUEL MAGDALENA, Miguel Angel, E-50017 Zaragoza (ES); DE LA CUERDA ORTIN, Jose Maria, E-50018 Zaragoza (ES); GARCIA JIMENEZ, Jose-Ramon, E-50009 Zaragoza (ES); GARCIA MARTINEZ, Jose Andres, E-50014 Zaragoza (ES); GARDE ARANDA, Ignacio, E-50012 Zaragoza (ES); HERNANDEZ BLASCO, Pablo Jesus, E-50410 Cuarte de Huerva (Zaragoza) (ES); LLORENTE GIL, Sergio, E-50009 Zaragoza (ES); LORENTE PEREZ, Alfonso, E-50019 Zaragoza (ES); MURESAN, Paul, E-50720 La Cartuja (ES); ORTIZ SAINZ, David, E-50298 Pinseque (Zaragoza) (ES); PEINADO ADIEGO, Ramon, E-50008 Zaragoza (ES); PINA GADEA, Carmelo, E-50008 Zaragoza (ES); PUYAL PUENTE, Diego, E-50014 Zaragoza (ES); RIVERA PEMAN, Julio, E-50410 Cuarte de Huerva (Zaragoza) (ES)
(86) Internationale Anmeldenummer: PCT/IB2012/052293
(87) Internationale Veröffentlichungsnummer: WO 2012/156864

(56) Entgegenhaltungen:
- EP-A1- 2 112 861
- EP-A2- 2 385 311
- EP-B1- 0 727 668
- EP-B1- 1 159 779
- WO-A1-2009/058941
- DE-A1-102005 018 276
- DE-A1-102008 009 659
- DE-A1-102009 000 652
- DE-A1-102009 027 799
- DE-A1-102010 063 757
- US-A1- 2004 256 378
- US-A1- 2011 095 017

## Beschreibung

Es sind Geschirrspülmaschinen, Waschmaschinen und Wäschetrockner bekannt, welche an ein intelligentes Stromnetz anschließbar sind und eine entsprechende Kommunikationseinheit aufweisen, die ein Senden von Daten an und einen Empfang von Daten aus dem intelligenten Stromnetz gestattet. Hierdurch kann ein Betriebsvorgang zeitverzögert gestartet werden, um Leistung aus einem Stromnetz erst dann aufzunehmen, wenn das Stromnetz durch Verbraucher relativ wenig belastet ist. US 2011/095017 A1 offenbart eine Gargerät.

Die Aufgabe der Erfindung besteht insbesondere darin, ein Gargerät mit verbesserten Eigenschaften hinsichtlich eines Bedienkomforts bereitzustellen. Die Aufgabe wird erfindungsgemäß durch die Merkmale des Patentanspruchs 1 und des Verfahrensanspruchs 7 gelöst. Vorteilhafte Ausgestaltungen und Weiterbildungen der Erfindung können den Unteransprüchen entnommen werden.

Es wird ein Gargerät, insbesondere ein Kochfeld, vorgeschlagen mit einer Leistungseinheit, einer Kommunikationseinheit zum Empfang wenigstens einer Information aus einem Datennetzwerk und einer Steuereinheit, die dazu vorgesehen ist, zumindest in Abhängigkeit von der wenigstens einen Information, zumindest eine Betriebskenngröße der Leistungseinheit zu verändern. Unter "vorgesehen" soll speziell ausgelegt und/oder ausgestattet und/oder programmiert verstanden werden. Unter einer "Leistungseinheit" soll diejenige Einheit eines Gargeräts verstanden werden, welche in zumindest einem Betriebszustand eine höchste Leistungsaufnahme aufweist und zu einer Beheizung vorgesehen ist. Unter einer "Kommunikationseinheit" soll eine von einer Eingabeeinheit verschiedene Einheit verstanden werden, die mit anderen Geräten, insbesondere einer von der Steuereinheit verschiedenen Recheneinheit und/oder einem Stromzähler, kommuniziert, insbesondere über Kabel und vorzugsweise zumindest streckenweise kabellos, und die insbesondere wenigstens eine Information von dort bezieht. Das andere Gerät ist ein Gerät in einem Datennetzwerk, und zwar im Internet und/oder in einem Heimnetzwerk und/oder in einem intelligenten Stromnetz. Unter einer "Eingabeeinheit" soll hier und im Folgenden insbesondere eine Bedieneinheit verstanden werden, die zu einer Eingabe und/oder Änderung eines Betriebsparameters durch einen Bediener vorgesehen ist. Vorzugsweise ist die Eingabeeinheit zu einer manuellen Eingabe und/oder Änderung, insbesondere mittels hierfür bereitgestellter Bedienelemente, vorgesehen. Unter einem "intelligenten Stromnetz" soll eine kommunikative Vernetzung und/oder Steuerung von Stromerzeugern, elektrischen Energiespeichern, elektrischen Verbrauchern und/oder Netzbetriebsmitteln in Energieübertragungsnetzen und/oder Energieverteilungsnetzen einer Elektrizitätsversorgung verstanden werden. Unter einer "Steuereinheit" soll eine Einheit verstanden werden, die dazu vorgesehen ist, die Leistungseinheit zu steuern und/oder zu regeln. Vorzugsweise umfasst die Steuereinheit eine Recheneinheit, insbesondere eine Mikroprozessoreinheit, und insbesondere eine von der Recheneinheit verschiedene Speichereinheit, in der besonders vorteilhaft ein Steuer- und/oder Regelprogramm abgespeichert ist. Unter einer "Betriebskenngröße" soll eine physikalische Größe eines Betriebszustands der Leistungseinheit verstanden werden. Ein Wert der Betriebskenngröße ist vorzugsweise stets von Null verschieden. Die Betriebskenngröße ist insbesondere von einer logischen Größe, welche insbesondere lediglich zwei Werte annehmen kann, verschieden. Die Betriebskenngröße ist insbesondere von einer logischen Größe verschieden, welche einen Einschaltzustand der Leistungseinheit kennzeichnet. Durch eine solche Ausgestaltung kann ein vorteilhaft höherer Bedienkomfort erreicht werden. Insbesondere kann eine Fernsteuerung und/oder Fernwartung eines die Gargerätevorrichtung aufweisenden Gargeräts ermöglicht werden.

In der Erfindung wird vorgeschlagen, dass die wenigstens eine Betriebskenngröße eine Leistungskenngröße ist, welche eine maximale Leistung, und zwar eine maximal bereitstellbare Leistung, der Leistungseinheit festlegt. Es handelt sich bei der Leistungskenngröße um einen elektrischen Maximalstrom, welcher maximal der Leistungseinheit bereitgestellt werden kann, insbesondere durch eine Stromversorgung eines Privathaushalts. Hierdurch kann eine automatische Anpassung einer Maximalleistung eines Gargeräts vorgenommen werden, insbesondere an eine elektrische Hausinstallation. Insbesondere können Daten zur verfügbaren Maximalleistung einzelner an die Hausinstallation angeschlossener Verbraucher in dem Datennetzwerk verfügbar sein, wobei die Kommunikationseinheit auf diese Daten zugreifen kann.

In einem Aspekt der Erfindung ist die Kommunikationseinheit dazu vorgesehen, die Steuereinheit mit einem intelligenten Stromnetz zu verbinden. Hierdurch können Energiekosten reduziert werden, da in Abhängigkeit von einer Verfügbarkeit von elektrischer Leistung im Stromnetz und somit in Abhängigkeit vom Preis pro elektrische Energieeinheit eine bestimmte Leistung maximal für die Leistungseinheit bereitgestellt werden kann. Wenn das Gargerät als Backofen mit Pyrolysefunktion ausgebildet ist, kann eine pyrolytische Selbstreinigung vorzugsweise dann erfolgen, wenn eine relativ hohe Verfügbarkeit von elektrischer Leistung im Stromnetz gegeben ist. Des Weiteren kann im Falle einer Stromkontingentierung, wenn ein Gesamtstromverbrauch aller an eine Hausinstallation angeschlossenen Verbraucher unter einem Grenzwert liegen soll, eine Maximalleistung des Gargeräts zur Einhaltung des Grenzwerts begrenzt werden.

Ferner wird vorgeschlagen, dass die Gargerätevorrichtung eine Eingabeeinheit zur Eingabe von Betriebskenngrößen der Leistungseinheit aufweist. Hierdurch kann ein Bedienkomfort besonders vorteilhaft gesteigert werden, da eine von der Kommunikationseinheit bezogene Einstellung der zumindest einen Betriebskenngröße bei Bedarf durch einen Bediener überschrieben werden kann. So kann beispielsweise eine Leistungskenngröße durch einen Bediener manuell erhöht werden, wenn dies für einen Garvorgang nötig ist.

Vorteilhaft ist die Steuereinheit dazu vorgesehen, zumindest in Abhängigkeit von mindestens einer Information, die die Steuereinheit über die Eingabeeinheit bezieht, die wenigstens eine Betriebskenngröße der Leistungseinheit zu verändern. Hierdurch kann ein Bedienkomfort vorteilhaft erhöht werden, da ein Bediener im Falle einer unvorteilhaft niedrigen Leistungskenngröße der Leistungseinheit ein manuelles Überschreiben der Leistungskenngröße vornehmen kann.

In einer weiteren Ausgestaltung der Erfindung wird vorgeschlagen, dass die Gargerätevorrichtung eine Ausgabeeinheit zur Ausgabe von Betriebskenngrößen der Leistungseinheit umfasst. Unter einer "Ausgabeeinheit" soll insbesondere eine Einheit verstanden werden, die zu einer optischen und/oder akustischen und/oder taktilen und/oder elektronischen Ausgabe einer Betriebskenngröße vorgesehen ist. Vorzugsweise umfasst die Ausgabeeinheit eine Anzeigeneinheit, vorzugsweise ein LCD-Display, und/oder eine Kommunikationsschnittstelle, die zu einer elektronischen Ausgabe der Betriebskenngröße vorgesehen ist. Mit Vorteil stellt die Kommunikationsschnittstelle die Betriebskenngröße in einer elektronischen Kodierung zur Verfügung, so dass sie elektronisch lesbar ist, insbesondere durch eine Recheneinheit und vorzugsweise zu einer Weiterverarbeitung durch die Recheneinheit. Hierdurch kann eine vorteilhafte Transparenz für einen Bediener geschaffen werden, so dass dieser zu jeder Zeit über den Betriebszustand der Leistungseinheit informiert ist und gegebenenfalls über die Eingabeeinheit intervenieren kann.

Vorteilhaft ist die Steuereinheit dazu vorgesehen, einen aktuellen Wert der wenigstens einen Betriebskenngröße über die Ausgabeeinheit auszugeben. Hierdurch kann ein vorteilhaft hoher Bedienkomfort erzielt werden, da ein Bediener zu jeder Zeit eine Information über die Betriebskenngröße erhalten kann.

Ferner wird vorgeschlagen, dass die Kommunikationseinheit zumindest teilweise einstückig mit der Steuereinheit ausgebildet ist. Darunter, dass "die Kommunikationseinheit zumindest teilweise einstückig mit der Steuereinheit ausgebildet ist", soll insbesondere verstanden werden, dass die Kommunikationseinheit zumindest teilweise in der Steuereinheit integriert ist. Vorzugsweise sind die Kommunikationseinheit und die Steuereinheit innerhalb einer einzelnen elektronischen Baugruppe und vorzugsweise auf einer einzelnen elektronischen Leiterplatte angeordnet. Hierdurch kann ein Material- und Montageaufwand vorteilhaft reduziert werden. Ferner kann Gewicht eingespart werden.

Des Weiteren wird ein Verfahren nach Anspruch 7 vorgeschlagen.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Draufsicht auf ein Gargerät nach der Erfindung mit einer Gargerätevorrichtung und
- Fig. 2: eine schematische Blockdarstellung der Gargerätevorrichtung.

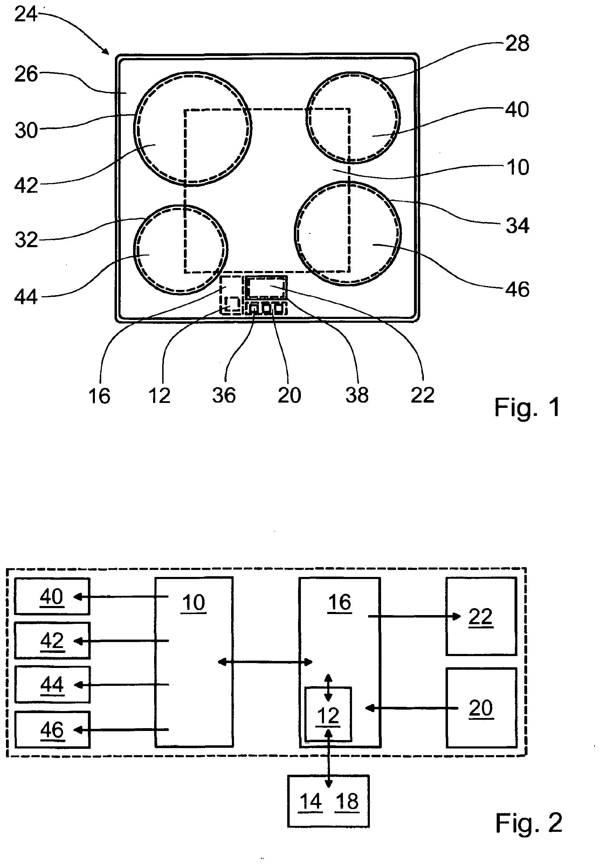

Fig. 1 zeigt eine schematische Draufsicht auf ein als Kochfeld 24 ausgebildetes Gargerät. Das Kochfeld 24 umfasst eine Kochfeldplatte 26, insbesondere aus einer Glaskeramik, auf der in bekannter Weise Heizzonen 28, 30, 32, 34 markiert sind. Die Kochfeldplatte 26 ist in einem betriebsbereiten Zustand des Kochfelds 24 horizontal angeordnet und zu einem Aufstellen von Gargeschirr vorgesehen. Des Weiteren sind auf der Kochfeldplatte 26 in bekannter Weise berührungsempfindliche Bedienelemente 36 und ein Anzeigeelement 38 markiert. Das als Kochfeld 24 ausgebildete Gargerät umfasst ferner eine unterhalb der Kochfeldplatte 26 angeordnete Gargerätevorrichtung (unterhalb der Kochfeldplatte 26 angeordnete Bauteile sind in Fig. 1 gestrichelt eingezeichnet). Die Gargerätevorrichtung umfasst eine Leistungseinheit 10, eine Kommunikationseinheit 12, eine Steuereinheit 16, eine Eingabeeinheit 20 und eine Ausgabeeinheit 22. Die Leistungseinheit 10 versorgt in wenigstens einem Betriebszustand den Heizzonen 28, 30, 32, 34 zugeordnete Heizeinheiten 40, 42, 44, 46 der Gargerätevorrichtung mit elektrischer Energie. Bei den Heizeinheiten 40, 42, 44, 46 kann es sich um beliebige, dem Fachmann als sinnvoll erscheinende elektrische Heizeinheiten 40, 42, 44, 46 handeln, insbesondere um Widerstandsheizeinheiten, Strahlungsheizeinheiten und vorzugsweise Induktionsheizeinheiten. Die Kommunikationseinheit 12 ist einstückig mit der Steuereinheit 16 ausgeführt. Die Kommunikationseinheit 12 ist zu einer Verbindung mit einem Datennetzwerk 14 und zwar mit einem intelligenten Stromnetz 18 vorgesehen (vgl. Fig. 2). Die auf der Kochfeldplatte 26 markierten berührungsempfindlichen Bedienelemente 36 stehen mit der Eingabeeinheit 20 in kapazitiver Wirkverbindung. Eine Berührung der Bedienelemente 36 durch einen Bediener mit einem Finger wird durch die Eingabeeinheit 20 in bekannter Weise registriert. Die Eingabeeinheit 20 dient zur Eingabe von Betriebskenngrößen der Leistungseinheit 10. Das auf der Kochfeldplatte 26 markierte Anzeigeelement 38 ist Teil der Ausgabeeinheit 22 und dient zur Ausgabe von Betriebskenngrößen der Leistungseinheit 10.

Fig. 2 zeigt eine schematische Blockdarstellung der Gargerätevorrichtung. In zumindest einem Betriebszustand empfängt die Kommunikationseinheit 12 eine Information aus dem Datennetzwerk 14 und übermittelt diese an die Steuereinheit 16. In Abhängigkeit von der information verändert die Steuereinheit 16 eine Betriebskenngröße der Leistungseinheit 10. Bei der Information kann es sich um einen Wert der Betriebskenngröße oder um eine Aufforderung zur Erhöhung oder Reduzierung der Betriebskenngröße handeln. Bei der Betriebskenngröße handelt es sich um eine Leistungskenngröße, welche eine maximale Leistung der Leistungseinheit 10 festlegt. Bei konstanter Effektivspannung eines Stromversorgungsnetzes entspricht dies einer Festlegung eines maximalen Effektivstroms. Die Steuereinheit 16 gibt die Betriebskenngröße über die Ausgabeeinheit 22 an einen Bediener aus. Dieser hat mit Hilfe der Eingabeeinheit 20 die Möglichkeit, die aus dem Datennetzwerk 14 ermittelte Betriebskenngröße manuell zu überschreiben. In einem Betrieb der von der Leistungseinheit 10 mit Energie versorgten Heizeinheiten 40, 42, 44, 46 wird durch die Steuereinheit 16 sichergestellt, dass eine Gesamtleistungsaufnahme der Leistungseinheit 10 höchstens der Leistungskenngröße entspricht. Die Heizeinheiten 40, 42, 44, 46 werden gegebenenfalls mit einer unterhalb einer Soll-Leistung liegenden Ist-Leistung betrieben, wobei eine Entscheidung, welche der Heizeinheiten 40, 42, 44, 46 in ihrer Leistung reduziert wird, auf beliebiger, dem Fachmann als sinnvoll erscheinender Grundlage erfolgen kann. So kann es beispielsweise dem Bediener überlassen werden, welche der Heizeinheiten 40, 42, 44, 46 in ihrer Leistung reduziert wird. Alternativ können die Leistungen der Heizeinheiten 40, 42, 44, 46 auch gleichmäßig reduziert werden. Ferner ist auch denkbar, dass eine automatische Priorisierung der Heizeinheiten 40, 42, 44, 46 vorgenommen wird, beispielsweise auf Grundlage einer Einschaltdauer, einer Soll-Leistung und/oder eines Garprogramms der betreffenden Heizeinheit 40, 42, 44, 46.

### Bezugszeichen

- 10: Leistungseinheit
- 12: Kommunikationseinheit
- 14: Datennetzwerk
- 16: Steuereinheit
- 18: Intelligentes Stromnetz
- 20: Eingabeeinheit
- 22: Ausgabeeinheit
- 24: Kochfeld
- 26: Kochfeldplatte
- 28: Heizzone
- 30: Heizzone
- 32: Heizzone
- 34: Heizzone
- 36: Bedienelement
- 38: Anzeigeelement
- 40: Heizeinheit
- 42: Heizeinheit
- 44: Heizeinheit
- 46: Heizeinheit

## Patentansprüche

1. Gargerät, insbesondere Kochfeld (24), mit einer Gargerätevorrichtung, insbesondere einer Kochfeldvorrichtung mit Heizeinheiten (40, 42, 44, 46), mit einer Leistungseinheit (10), welche in wenigstens einem Betriebszustand die Heizeinheiten (40, 42, 44, 46) mit elektrischer Energie versorgt, mit einer Kommunikationseinheit (12) zum Empfang wenigstens einer Information aus einem Datennetzwerk (14), und zwar aus dem Internet und/oder aus einem Heimnetzwerk und/oder aus einem intelligenten Stromnetz (18), und mit einer Steuereinheit (16), die dazu vorgesehen ist, zumindest in Abhängigkeit von der wenigstens einen Information, zumindest eine Betriebskenngröße der Leistungseinheit (10) zu verändern, wobei die wenigstens eine Betriebskenngröße eine Leistungskenngröße ist, welche eine maximale Leistung, und zwar eine maximal bereitstellbare Leistung, der Leistungseinheit (10) festlegt, wobei es sich bei der Leistungskenngröße um einen elektrischen Maximalstrom handelt, welcher maximal der Leistungseinheit (10) bereitgestellt werden kann.

2. Gargerät nach Anspruch 1, **dadurch gekennzeichnet, dass** die Gargerätevorrichtung eine Eingabeeinheit (20) zur Eingabe von Betriebskenngrößen der Leistungseinheit (10) aufweist.

3. Gargerät nach Anspruch 2, **dadurch gekennzeichnet, dass** die Steuereinheit (16) dazu vorgesehen ist, zumindest in Abhängigkeit von mindestens einer Information, die die Steuereinheit (16) über die Eingabeeinheit (20) bezieht, die wenigstens eine Betriebskenngröße der Leistungseinheit (10) zu verändern.

4. Gargerät nach einem der vorhergehenden Ansprüche, **dadurch gekennzeichnet, dass** die Gargerätevorrichtung eine Ausgabeeinheit (22) zur Ausgabe von Betriebskenngrößen der Leistungseinheit (10) aufweist.

5. Gargerät nach Anspruch 4, **dadurch gekennzeichnet, dass** die Steuereinheit (16) dazu vorgesehen ist, einen aktuellen Wert der wenigstens einen Betriebskenngröße über die Ausgabeeinheit (22) auszugeben.

6. Gargerät nach einem der vorhergehenden Ansprüche, **dadurch gekennzeichnet, dass** die Kommunikationseinheit (12) zumindest teilweise einstückig mit der Steuereinheit (16) ausgebildet ist.

7. Verfahren mit einer Gargerätevorrichtung, insbesondere einer Kochfeldvorrichtung, mit Heizeinheiten (40, 42, 44, 46) und mit einer Leistungseinheit (10), welche in wenigstens einem Betriebszustand die Heizeinheiten (40, 42, 44, 46) mit elektrischer Energie versorgt, bei dem wenigstens eine Information aus einem Datennetzwerk (14). und zwar aus dem Internet und/oder aus einem Heimnetzwerk und/oder aus einem intelligenten Stromnetz (18), empfangen wird und zumindest in Abhängigkeit von der wenigstens einen Information zumindest eine Betriebskenngröße der Leistungseinheit (10) verändert wird, wobei die wenigstens eine Betriebskenngröße eine Leistungskenngröße ist, welche eine maximale Leistung, und zwar eine maximal bereitstellbare Leistung, der Leistungseinheit (10) festlegt, wobei es sich bei der Leistungskenngröße um einen elektrischen Maximalstrom handelt, welcher maximal der Leistungseinheit (10) bereitgestellt werden kann.

## Claims

1. Cooking appliance, in particular a cooktop (24), having a cooking appliance apparatus, in particular a cooktop apparatus, having heating units (40, 42, 44, 46), with a power unit (10) which supplies the heating units (40, 42, 44, 46) with electrical energy in at least one operating state, with a communication unit (12) for receiving at least one information item from a data network (14), specifically from the Internet and/or from a home network and/or from an intelligent power network (18), and with a control unit (16), which is provided to change at least one operating parameter of the power unit (10) at least as a function of the at least one information item, wherein the at least one operating parameter is a power parameter, which sets a maximum power, specifically a maximum power which can be provided, of the power unit (10), wherein the power parameter involves a maximum electric current which can be provided to the power unit (10) at a maximum.

2. Cooking appliance according to claim 1, **characterised in that** the cooking appliance apparatus has an input unit (20) for inputting operating parameters of the power unit (10).

3. Cooking appliance according to claim 2, **characterised in that** the control unit (16) is provided to change the at least one operating parameter of the power unit (10) at least as a function of at least one information item which the control unit (16) obtains by way of the input unit (20).

4. Cooking appliance according to one of the preceding claims, **characterised in that** the cooking appliance apparatus has an output unit (22) for outputting operating parameters of the power unit (10).

5. Cooking appliance according to claim 4, **characterised in that** the control unit (16) is provided to output a current value of the at least one operating parameter by way of the output unit (22).

6. Cooking appliance according to one of the preceding claims, **characterised in that** the communication unit (12) is configured at least partially as a single piece with the control unit (16).

7. Method with a cooking appliance apparatus, in particular a cooktop apparatus, having heating units (40, 42, 44, 46) and with a power unit (10), which supplies the heating units (40, 42, 44, 46) with electrical energy in at least one operating state, wherein at least one information item is received from a data network (14), specifically from the Internet and/or from a home network and/or from an intelligent power network (18), and at least one operating parameter of the power unit (10) is changed at least as a function of the at least one information item, wherein the at least one operating parameter is a power parameter, which defines a maximum power, specifically a maximum power which can be provided, of the power unit (10), wherein the power parameter involves a maximum electric current which can be provided to the power unit (10) at a maximum.

## Revendications

1. Appareil de cuisson, en particulier plaque de cuisson (24), avec un dispositif pour appareil de cuisson, en particulier un dispositif pour plaque de cuisson avec des unités chauffantes (40, 42, 44, 46), avec une unité de puissance (10), qui alimente en énergie électrique dans au moins un état de fonctionnement les unités chauffantes (40, 42, 44, 46), avec une unité de communication (12) destinée à réceptionner au moins une information provenant d'un réseau de données (14), à savoir Internet et/ou un réseau domestique et/ou un réseau électrique intelligent (18), et avec une unité de commande (16), laquelle est prévue pour modifier au moins en fonction de l'au moins une information, au moins une grandeur caractéristique de fonctionnement de l'unité de puissance (10), dans lequel l'au moins une grandeur caractéristique de fonctionnement est une grandeur caractéristique de puissance, laquelle détermine une puissance maximale, à savoir une puissance pouvant être mise à disposition au maximum, de l'unité de puissance (10), dans lequel la grandeur caractéristique de puissance est un courant maximal électrique, lequel peut être mis à disposition au maximum de l'unité de puissance (10).

2. Appareil de cuisson selon la revendication 1, **caractérisé en ce que** le dispositif pour appareil de cuisson présente une unité de saisie (20) destinée à la saisie de grandeurs caractéristiques de fonctionnement de l'unité de puissance (10).

3. Appareil de cuisson selon la revendication 2, **caractérisé en ce que** l'unité de commande (16) est prévue pour modifier, au moins en fonction d'au moins une information que l'unité de commande (16) acquiert via l'unité de saisie (20), l'au moins une grandeur caractéristique de fonctionnement de l'unité de puissance (10).

4. Appareil de cuisson selon l'une des revendications précédentes, **caractérisé en ce que** le dispositif pour appareil de cuisson présente une unité d'émission (22) destinée à l'émission de grandeurs caractéristiques de fonctionnement de l'unité de puissance (10).

5. Appareil de cuisson selon la revendication 4, **caractérisé en ce que** l'unité de commande (16) est prévue pour émettre une valeur actuelle de l'au moins une grandeur caractéristique de fonctionnement via l'unité d'émission (22).

6. Appareil de cuisson selon l'une des revendications précédentes, **caractérisé en ce que** l'unité de communication (12) est constituée au moins en partie d'un seul tenant avec l'unité de commande (16).

7. Procédé avec un dispositif pour appareil de cuisson, en particulier un dispositif pour plaque de cuisson, avec des unités chauffantes (40, 42, 44, 46) et avec une unité de puissance (10), laquelle alimente les unités chauffantes (40, 42, 44, 46) en énergie électrique dans au moins un état de fonctionnement, dans lequel au moins une information provenant d'un réseau de données (14), à savoir Internet et/ou un réseau domestique et/ou un réseau électrique intelligent (18), est reçue et une grandeur caractéristique de fonctionnement de l'unité de puissance (10) est modifiée au moins en fonction de l'au moins une information, dans lequel l'au moins une grandeur caractéristique de fonctionnement est une grandeur caractéristique de puissance, laquelle détermine une puissance maximale, à savoir une puissance pouvant être mise à disposition au maximum, de l'unité de puissance (10), dans lequel la grandeur caractéristique de puissance est un courant maximal électrique qui peut être mis à disposition au maximum de l'unité de puissance (10)
